(19) Europäisches Patentamt / European Patent Office / Office européen des brevets

(11) **EP 4 242 999 A1**

(12) **EUROPEAN PATENT APPLICATION**
published in accordance with Art. 153(4) EPC

(43) Date of publication:
**13.09.2023 Bulletin 2023/37**

(21) Application number: **20960810.8**

(22) Date of filing: **06.11.2020**

(51) International Patent Classification (IPC):
*G08G 1/09* (2006.01)     *B60W 50/02* (2012.01)
*B60W 60/00* (2020.01)

(52) Cooperative Patent Classification (CPC):
**G08G 1/164; B60W 50/02; B60W 60/00;**
**G08G 1/09; G08G 1/166; G08G 1/167**

(86) International application number:
**PCT/JP2020/041474**

(87) International publication number:
**WO 2022/097257 (12.05.2022 Gazette 2022/19)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **MITSUBISHI ELECTRIC**
**CORPORATION**
**Chiyoda-ku**
**Tokyo 100-8310 (JP)**

(72) Inventors:
• **WADA, Yuta**
**Tokyo 100-8310 (JP)**
• **ITO, Masuo**
**Tokyo 100-8310 (JP)**

(74) Representative: **Hoffmann Eitle**
**Patent- und Rechtsanwälte PartmbB**
**Arabellastraße 30**
**81925 München (DE)**

(54) **VEHICLE CONTROL SYSTEM**

(57)     An external control apparatus (10) performs a main calculation, and a vehicle-mounted control apparatus (20) transmits a control command for controlling an automatic driving vehicle, based on a calculation result. In the case where the algorithm itself of the external control apparatus (10) has a deficiency or in the case where the access time of the calculation result to the vehicle exceeds an allowable time, there exists no means for covering these troubles and hence the vehicle may be caused to operate unstably. In a vehicle control system (101) according to the present disclosure, the vehicle-mounted control apparatus (20) determines whether or not the calculation result of the external control apparatus (10) satisfies an allowable condition. In the case where the allowable condition is satisfied, the vehicle is controlled based on the result of the main calculation by the external control apparatus (10), and in the case where the allowable condition is not satisfied, the vehicle is controlled based on the result of a backup calculation by the vehicle-mounted control apparatus (20); therefore, the vehicle can continue stable traveling.

FIG.1

EP 4 242 999 A1

## Description

Technical Field

The present disclosure relates to a vehicle control system.

Background Art

In order to deal with the complicated environment and for the sake of higher-level vehicle control, the calculation amount of algorithm required for controlling an automatic driving vehicle has been increasing. In contrast, because due to strong requirement for reducing the cost of a vehicle, the specification of the CPU (Central Processing Unit) in an ECU (Electronic Control Unit) mounted in an automatic driving vehicle is suppressed low, the situation in the vehicle is showing a tendency that the calculation amount required for controlling automatic driving cannot completely be covered. In addition, in the environment where two or more vehicles exist, collaboration among the vehicles is required; it has become a tendency that the surrounding road-environment system takes the role of controlling the collaboration. Under such a background, an automatic-driving control system, an automatic-driving control method, and a vehicle technology for externally controlling automatic driving of a vehicle have been disclosed (e.g., Patent Document 1).

Citation List

Patent Literature

Patent Document 1: Japanese Patent Application Laid-Open No. 2019-106674

Summary of Invention

Technical Problem

In the technology according to Patent Document 1, an external control apparatus that is located outside a vehicle and is connected therewith through a network performs calculation processing related to vehicle automatic driving and then transmits a control command for controlling the automatic driving of the vehicle, based on the result of the processing.

However, with regard to the temporal relevance between the information processing apparatus and the vehicle, it is not clear at which timing the calculation result in the external control apparatus is based on vehicle information and for which timing the vehicle control command is. Accordingly, in some cases, the vehicle control command based on old information may be received and hence the vehicle may be caused to operate unstably.

In addition, in the technology according to Patent Document 1, two or more external control apparatuses per vehicle perform the same calculation processing related to automatic driving. Then, only when the processing results obtained by more than half of the external control apparatuses coincide with one another, control information to be created based on that one and the same processing result is transmitted to the vehicle.

As is described above, there is taken measures in which the majority among the two or more external control apparatuses is taken so that an error in the calculation result of the external control apparatus is prevented. However, in the case where the algorithm itself of the external control apparatus has a deficiency or in the case where the access time of the calculation result to the vehicle exceeds an allowable time, there exists no means for covering these troubles and hence the vehicle may be caused to operate unstably.

The objective of the present disclosure is to obtain a vehicle control system in which a vehicle-mounted control apparatus determines whether or not a calculation result of an external control apparatus satisfies an allowable condition and then the vehicle is controlled not to operate unstably.

Solution to Problem

A vehicle control system according to the present disclosure includes

an external control apparatus that performs a main calculation for controlling a vehicle, and
a vehicle-mounted control apparatus that is connected with the external control apparatus through a network and performs a backup calculation for controlling the vehicle; the vehicle-mounted control apparatus includes
a vehicle information creation unit that obtains respective information pieces inside and outside a vehicle and creates vehicle information,
a transmission unit that transmits the vehicle information to the external control apparatus,
a reception unit that receives a result of the main calculation from the external control apparatus,
a vehicle-mounted calculation unit that outputs a result of a backup calculation performed based on the vehicle information, and
a vehicle control unit that controls the vehicle based on a result of the main calculation, when the result of the main calculation satisfies a predetermined allowable condition, and that controls the vehicle based on a result of the backup calculation, unless the result of the main calculation satisfies the allowable condition; the external control apparatus transmits the result of the main calculation, performed based on the vehicle information received from the transmission unit of the vehicle-mounted control apparatus, to the reception unit of the vehicle-mounted control apparatus.

Advantageous Effects of Invention

In the vehicle control system according to the present disclosure, the vehicle-mounted control apparatus determines whether or not the calculation result of the external control apparatus satisfies an allowable condition. In the case where the allowable condition is satisfied, the vehicle is controlled based on the result of the calculation by the external apparatus and in the case where the allowable condition is not satisfied, the vehicle is controlled by use of the result of the calculation by the vehicle-mounted control apparatus; therefore, the vehicle can continue stable traveling.

Brief Description of Drawings

FIG. 1 is a configuration diagram of a vehicle control system according to Embodiment 1;

FIG. 2 is a hardware configuration diagram of a vehicle-mounted control apparatus according to Embodiment 1;

FIG. 3 is a flowchart of main processing by the vehicle-mounted control apparatus according to Embodiment 1;

FIG. 4 is a flowchart of main processing by an external control apparatus according to Embodiment 1;

FIG. 5 is a flowchart of preliminary processing by the vehicle-mounted control apparatus according to Embodiment 1;

FIG. 6 is a flowchart of synchronous processing by the vehicle-mounted control apparatus according to Embodiment 1;

FIG. 7 is a flowchart of data transmission processing by the vehicle-mounted control apparatus according to Embodiment 1;

FIG. 8 is a flowchart of data reception processing by the external control apparatus according to Embodiment 1;

FIG. 9 is a flowchart of data transmission processing by the external control apparatus according to Embodiment 1;

FIG. 10 is a flowchart of data reception processing by the vehicle-mounted control apparatus according to Embodiment 1;

FIG. 11 is a flowchart of time confirmation processing by the vehicle-mounted control apparatus according to Embodiment 1;

FIG. 12 is a flowchart of calculation-result switching processing by the vehicle-mounted control apparatus according to Embodiment 1;

FIG. 13 is a configuration diagram of a vehicle control system according to Embodiment 2;

FIG. 14 is a flowchart of main processing by a vehicle-mounted control apparatus according to Embodiment 2;

FIG. 15 is a flowchart of preliminary processing by the vehicle-mounted control apparatus according to Embodiment 2;

FIG. 16 is a chart representing an example of calculation-result allowance determination by the vehicle-mounted control apparatus according to Embodiment 2;

FIG. 17 is a chart representing an example of a collision margin time obtained by the vehicle-mounted control apparatus according to Embodiment 2;

FIG. 18 is a flowchart of allowance determination processing by the vehicle-mounted control apparatus according to Embodiment 2;

FIG. 19 is a flowchart of calculation-result switching processing by the vehicle-mounted control apparatus according to Embodiment 2;

FIG. 20 is a chart representing an example of traveling-route changing by a vehicle-mounted control apparatus according to Embodiment 3;

FIG. 21 is a flowchart of main processing by a vehicle-mounted control apparatus according to Embodiment 4;

FIG. 22 is a flowchart of time-information-order confirmation processing by the vehicle-mounted control apparatus according to Embodiment 4;

FIG. 23 is a flowchart of calculation-result switching processing by the vehicle-mounted control apparatus according to Embodiment 4; and

FIG. 24 is a configuration diagram of a vehicle control system according to Embodiment 5.

Description of Embodiments

Hereinafter, a vehicle control system according to the present disclosure will be explained with reference to the drawings.

1. Embodiment 1

<Configuration of Vehicle Control System>

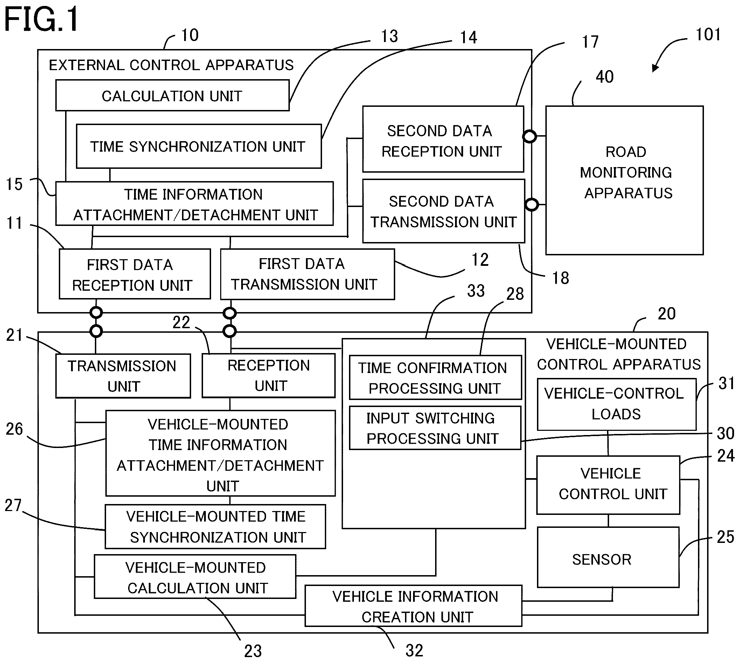

FIG. 1 is a diagram representing the configuration of a vehicle control system 101 according to Embodiment 1. The vehicle control system 101 includes a vehicle-mounted control apparatus 20 and an external control apparatus 10, which is an information processing apparatus to be connected with the vehicle-mounted control apparatus 20 through a network.

The vehicle-mounted control apparatus 20 is mounted in an automatic driving vehicle, obtains information items on the inside and the outside of the automatic driving vehicle so as to create vehicle information, and then transmits the vehicle information to the external control apparatus 10. The vehicle-mounted control apparatus 20 receives results of calculations for update of vehicle-surroundings recognition, creation of a vehicle traveling route, and the like from the external control apparatus 10 and then controls the automatic driving vehicle, based on the calculation results. The external control apparatus 10 is a MEC (Multi-access Edge Computing) server. MEC is a network computing technique that is provided through a 5G communication network and in which servers are arranged in a distributed manner near a base station so that processing that has been performed through cloud computing can be utilized in an ultra-short delay mode. Providing the external control apparatus 10 near a base station makes it possible that delays in information transmission to and from the automatic driving vehicle and calculation processing are shortened to substantially allowable levels and that the external control apparatus 10 transmits a control command to the automatic driving vehicle.

The vehicle-mounted control apparatus 20 has the following constituent element:

a transmission unit 21 that transmits vehicle information to the external control apparatus 10,
a reception unit 22 that receives data from the external control apparatus 10,
a vehicle-mounted time synchronization unit 27 that performs time synchronization with the external control apparatus 10,
a vehicle-mounted time information attachment/detachment unit 26 that performs attachment or detachment of time information in data transmission to and from the external control apparatus 10,
a sensor 25 for learning the states of the inside and the outside of a vehicle,
a vehicle information creation unit 32 that creates vehicle information based on information items from the sensor 25 and a vehicle control unit 24,
a vehicle-mounted calculation unit 23 that performs backup calculations for update of vehicle-surroundings recognition based on the vehicle information, creation of vehicle traveling route based on the updated vehicle-surroundings recognition, and the like, and then outputs the calculation results,
the vehicle control unit 24 that controls vehicle-control loads 31, based on information from the vehicle-mounted calculation unit 23,
The vehicle-control loads 31, which are a switching circuit, a driving circuit, and an actuator in the automatic driving vehicle and are directly linked to operation of an engine, an electric rotating machine, a brake, and the like, and
a time confirmation processing unit 28 that determines the validity period of vehicle information, dealt by the external control apparatus 10, in a calculation result to be transmitted from the external control apparatus 10 and the delay allowable time of a calculation execution time in the external control apparatus 10. The sensor 25 may be provided outside the vehicle-mounted control apparatus 20.

The external control apparatus 10 has the following constituent element:

a first data reception unit 11 that receives vehicle information from the vehicle-mounted control apparatus 20,
a first data transmission unit 12 that transmits a calculation result of the external control apparatus 10,
a time synchronization unit 14 that performs time synchronization with the vehicle-mounted control apparatus 20,
a time information attachment/detachment unit 15 that performs attachment or detachment of time information in data transmission to and from the vehicle-mounted control apparatus 20, and
a calculation unit 13 that performs main calculations for update of vehicle-surroundings recognition based on the vehicle information obtained from the vehicle-mounted control apparatus 20, creation of vehicle traveling route based on the updated vehicle-surroundings recognition, and the like, and then outputs the calculation results.

In addition, with regard to the processing ability, the performance of the external control apparatus 10 is higher than that of the vehicle-mounted control apparatus 20; thus, the external control apparatus 10 can perform a high-level calculation accurately and at high speed. Therefore, although the respective objectives of the calculation unit 13 provided in the external control apparatus 10 and the vehicle-mounted calculation unit 23 provided in the vehicle-mounted control apparatus 20 are equal to each other, the calculation unit 13 can obtain a higher-function and higher-performance result than the vehicle-mounted calculation unit 23 of the vehicle-mounted control apparatus 20 can obtain.

<Road Monitoring Apparatus>

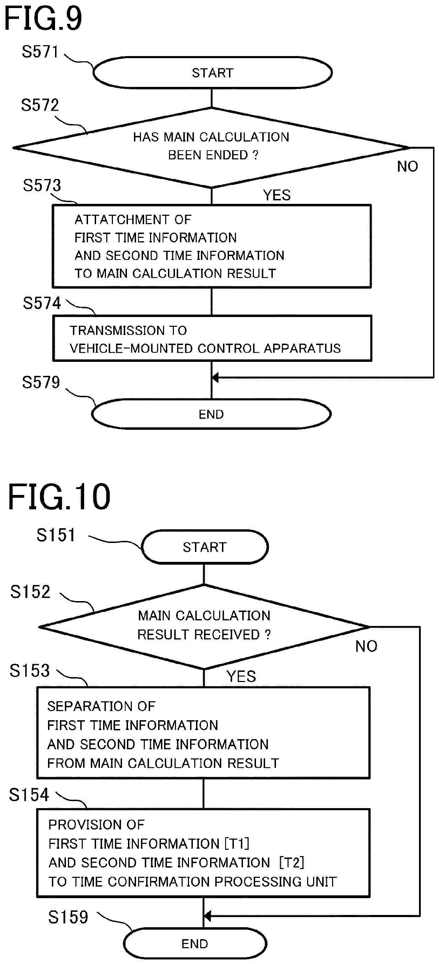

In addition, the external control apparatus 10 in FIG. 10 may be provided with a second data reception unit 17 that receives road information to be transmitted by a road monitoring apparatus 40 and a second data transmission unit 18 that transmits data to the road monitoring apparatus 40. In that case, the road monitoring apparatus 40 that monitors the situation of a road so as to create and transmit road information is added, so that the vehicle control system 101 includes the vehicle-mounted control apparatus 20, the external control apparatus 10, and the road monitoring apparatus 40. The vehicle control system 101 may include two or more vehicle-mounted control apparatuses 20, two or more external control apparatuses 10, two or more road monitoring apparatuses 40.

<Operation of Vehicle Control System>

The vehicle-mounted control apparatus 20 mounted in the automatic driving vehicle transmits vehicle information, created by the vehicle information creation unit 32 based on respective information items from the sensor 25 and the vehicle control unit 24, from the transmission unit 21 to the external control apparatus 10. The external control apparatus 10 transmits the result of a main calculation, performed based on the received vehicle information, to the reception unit 22 of the vehicle-mounted control apparatus 20.

In the case where the external control apparatus 10 receives road information from the road monitoring apparatus 40 that is provided on a road and monitors the situation of the road so as to create and transmit the road information, the main calculation is performed based on this road information and road information received from the vehicle-mounted control apparatus 20; therefore, a more appropriate result of the main calculation can be obtained from more information items. The external control apparatus 10 transmits this more appropriate result of the main calculation to the reception unit 22 of the vehicle-mounted control apparatus 20.

In the vehicle-mounted control apparatus 20, the vehicle-mounted calculation unit 23 inside the vehicle-mounted control apparatus 20 performs backup calculations based on vehicle information and outputs the calculation results. In a determination unit 33 in the vehicle-mounted control apparatus 20, the time confirmation processing unit 28 determines whether or not the result of the main calculation received from the external control apparatus 10 via the reception unit 22 satisfies a predetermined allowable condition. In the case where the predetermined allowable condition is satisfied, the automatic driving vehicle is controlled based on the result of the main calculation. Specifically, through switching by an input switching processing unit 30, the vehicle control unit 24 controls the vehicle-control loads 31 so that the automatic driving vehicle travels in accordance with a traveling route created in the main calculation. In the case where the result of the main calculation does not satisfy the allowable condition, through the switching of the input switching processing unit 30, the result of the main calculation is not utilized; instead, the automatic driving vehicle is controlled based on the result of the backup calculations performed by the vehicle-mounted calculation unit 23. Specifically, the vehicle control unit 24 controls the vehicle-control loads 31 so that the automatic driving vehicle travels in accordance with a traveling route created in the backup calculations.

As a result, in the case where the allowable condition is satisfied, the automatic driving vehicle can be made to travel based on a higher-function and higher-performance calculation result obtained by the calculation unit 13 provided in the external control apparatus 10. In addition, in the case where the allowable condition is not satisfied, the result of the main calculation obtained by the calculation unit 13 provided in the external control apparatus 10 is not utilized; instead, the automatic driving vehicle is controlled based on the result of the backup calculations performed by the vehicle-mounted calculation unit 23. Accordingly, unstable traveling can be prevented. Even in the case where the calculation result obtained by the calculation unit 13 provided in the external control apparatus 10 is wrong, stable traveling can be continued; thus, the foregoing method is significant.

Whether or not the predetermined allowable condition is satisfied is determined, for example, based on whether or not a first time information, related to the time of transmission, that is attached to vehicle information transmitted by the vehicle-mounted control apparatus 20 is within a predetermined first time range. That is to say, it is made possible that the time confirmation processing unit 28 determines not to utilize the calculation result based on vehicle information at a time when an excessive time has elapsed after the transmission thereof from the vehicle-mounted control apparatus 20.

In addition, whether or not the allowable condition is satisfied can be determined based on whether or not a second time information, related to the time of transmission thereof, that is attached at a time when the external control apparatus 10 transmits the result of the main calculation is within a predetermined second time range. That is to say, it is made possible that the time confirmation processing unit 28 determines not to utilize the calculation result at a time when an excessive time has elapsed after the transmission thereof from the external control apparatus 10.

Whether or not the predetermined allowable condition is satisfied is determined, for example, based on whether or not a third time information, related to the time when the vehicle information, that is attached to vehicle information transmitted by the vehicle-mounted control apparatus 20 is within a predetermined third time range. That is to say, it can be determined that the calculation result based on vehicle information at a time when an excessive time has elapsed after the creation thereof is not utilized.

In addition, whether or not the allowable condition is satisfied can be determined based on whether or not a fourth time information, related to the time when the main calculation has been performed, that is attached at a time when the external control apparatus 10 transmits the result of the main calculation is within a predetermined fourth time range. That is to say, it can be determined that the calculation result at a time when an excessive time has elapsed after the calculation thereof by the external control apparatus 10 is not utilized.

<Hardware Configuration of Control Apparatus>

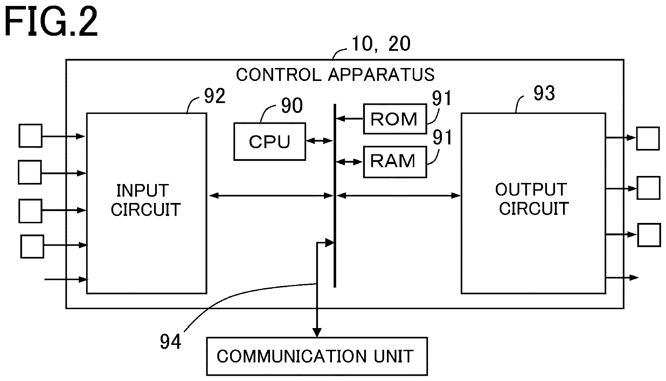

FIG. 2 is a hardware configuration diagram of the vehicle-mounted control apparatus 20 according to Embodiment 1. The configuration diagram can be applied also to the external control apparatus 10. Respective functions of the vehicle-mounted control apparatus 20 and the external control apparatus 10 are realized by processing circuits provided in the vehicle-mounted control apparatus 20 and the external control apparatus 10. Specifically, as illustrated in FIG. 2, each of the vehicle-mounted control apparatus 20 and the external control apparatus 10 includes, as processing circuits, a computing processing unit (computer) 90 such as a CPU (Central Processing Unit), storage apparatuses 91 that exchange data with the computing processing unit 90, an input circuit 92 that inputs external signals to the computing processing unit 90, an output circuit 93 that outputs signals from the computing processing unit 90 to the outside, an interface 94 that performs data exchange with an external apparatus such as a communication unit, and the like.

It may be allowed that as the computing processing unit 90, an ASIC (Application Specific Integrated Circuit), an IC (Integrated Circuit), a DSP (Digital Signal Processor), an FPGA (Field Programmable Gate Array), any one of various kinds of logic circuits, any one of various kinds of signal processing circuits, or the like is provided. In addition, it may be allowed that as the computing processing unit 90, two or more computing processing units of the same type or different types are provided and respective processing items are executed in a sharing manner. As the storage apparatuses 91, there are provided a RAM (Random Access Memory) that can read data from and write data in the computing processing unit 90, a ROM (Read Only Memory) that can read data from the computing processing unit 90, and the like. The storage apparatuses 91 may be provided outside each of the vehicle-mounted control apparatus 20 and the external control apparatus 10 in an additional manner. The input circuit 92 is connected with an input signal, sensors, and switches and is provided with an A/D converter and the like for inputting the input signal and signals from the sensors and the switches to the computing processing unit 90. Part of or all of the sensors may be incorporated in the vehicle-mounted control apparatus 20 and the external control apparatus 10. The output circuit 93 is connected with electric loads such as a gate driving circuit for on/off-driving the switching devices and the like, and is provided with a driving circuit and the like for outputting control signals from the computing processing unit 90 to these electric loads. The interface 94 exchanges data with external apparatuses such as the communication unit, an external storage apparatus, and an external control unit.

The computing processing unit 90 executes software items (programs) stored in the storage apparatus 91 such as a ROM and collaborates with other hardware devices in the vehicle-mounted control apparatus 20 and the external control apparatus 10, such as the storage apparatus 91, the input circuit 92, and the output circuit 93, so that the respective functions provided in the vehicle-mounted control apparatus 20 and the external control apparatus 10 are realized. In addition, setting data to be utilized in each of the functions is stored, as part of software items (programs), in the storage apparatus 91 such as a ROM.

The functions, represented by the blocks in FIG. 1, of the vehicle-mounted control apparatus 20 and the external control apparatus 10 may be configured with respective software modules. Moreover, it may be allowed that part of or all of the functions are configured with combinations of software and hardware.

<Main Processing by Vehicle-Mounted Control Apparatus>

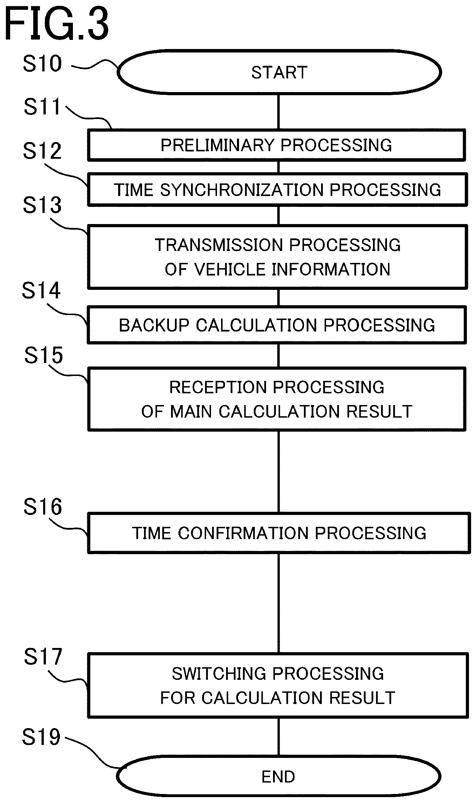

FIG. 3 is a flowchart of main processing by the vehicle-mounted control apparatus 20 according to Embodiment 1. The computing processing unit 90 provided in the vehicle-mounted control apparatus 20 executes software items represented in the flowchart. The main routine is executed every predetermined time (e.g., 1 ms). It may be allowed that the main routine is executed not every predetermined time but at each time of events such as reception interruption and transmission interruption of the vehicle-mounted control apparatus 20.

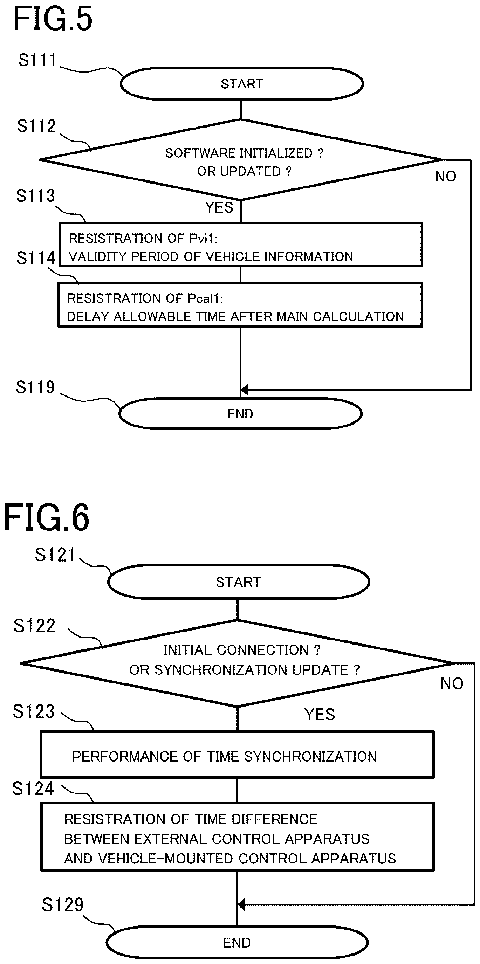

The main routine is started at the step S10 and preliminary processing is executed in the step S11. The preliminary processing is processing to be executed before the beginning of the operation or at each time of updates of software. In the preliminary processing, the validity period and the like of vehicle information are set. The step S11 is processing to be executed at least once before a vehicle is released; it is also executed also after the vehicle-mounted control apparatus 20 is released, because in recent years, the software of the vehicle-mounted control apparatus 20 has been updated whenever necessary through wireless communication or the like. The contents of the step S11 is explained in detail in FIG. 5. Next, in the step S12, communication with the external control apparatus 10 is performed, so that time synchronization processing is performed. The contents of the step S12 is explained in detail in FIG. 6.

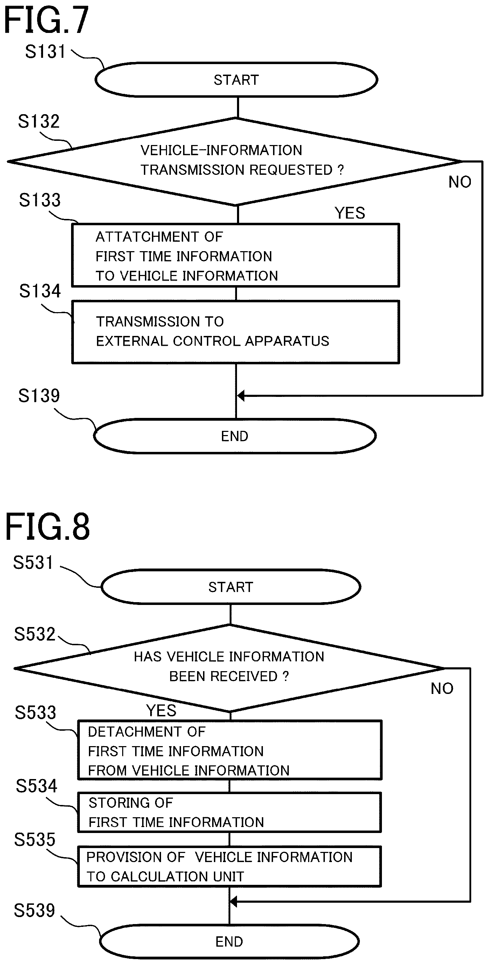

After the time synchronization processing, transmission processing of transmitting vehicle information from the vehicle-mounted control apparatus 20 to the external control apparatus 10 is performed in the step S13. The contents of the step S13 is explained in detail in FIG. 7.

After that, in the step S14, the vehicle-mounted calculation unit 23 performs backup calculations based on the vehicle information. The backup calculation is a calculation necessary for controlling an automatic driving vehicle, and includes, for example, update of surrounding recognition, creation of a vehicle traveling route, and the like. Based on the result of the main calculation by the external control apparatus 10, the automatic driving vehicle performs vehicle control. However, in the case where the result of the main calculation does not satisfy the allowable condition, the vehicle is controlled based on the results of vehicle-information-based backup calculations by the vehicle-mounted calculation unit 23.

In the step S15 following the step S14, the result of the main calculation, transmitted from the external control apparatus 10, is received. The contents of the step S15 is explained in detail in FIG. 10. After that, the time confirmation processing is performed in the step S16.

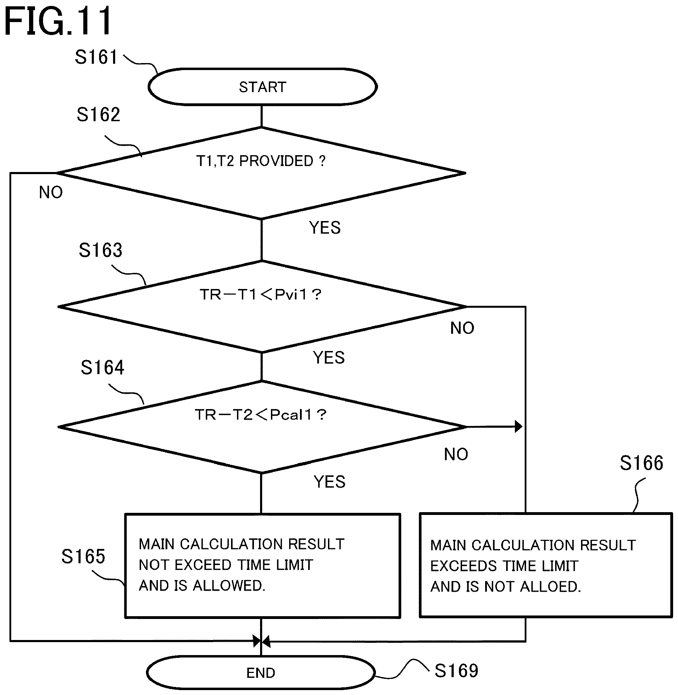

Whether or not the allowable condition is satisfied is determined by confirming time information attached to the result of the main calculation received from the external control apparatus 10. The contents of the step S16 is explained in detail in FIG. 11.

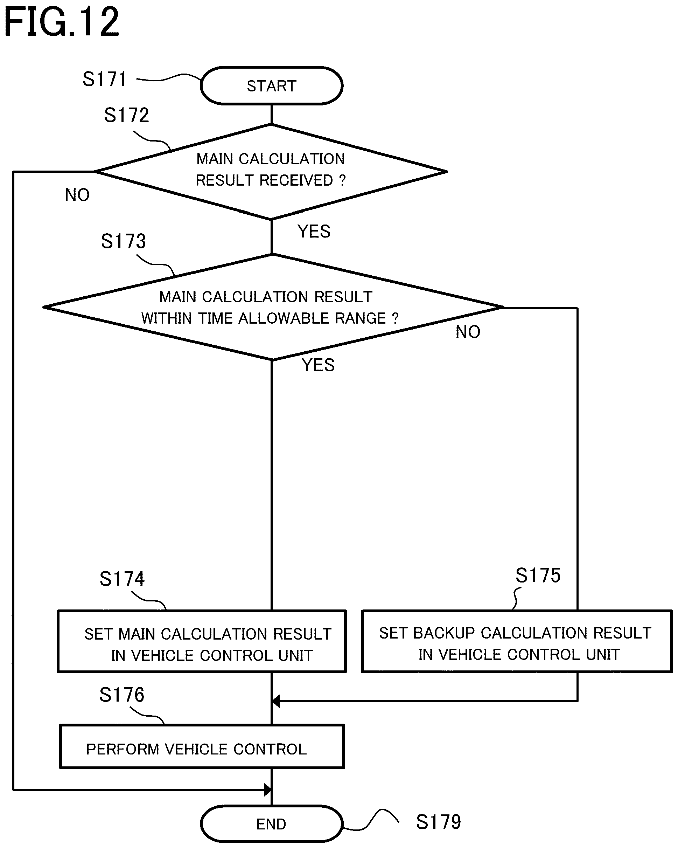

After the step S16, switching processing for the calculation results is performed in the step S17. In the case where the result of the main calculation satisfies the allowable condition, the vehicle control unit 24 controls the automatic driving vehicle via the vehicle-control loads 31, based on the result of the main calculation. In the case where the result of the main calculation does not satisfy the allowable condition, the vehicle control unit 24 controls the automatic driving vehicle via the vehicle-control loads 31, based on the result of the backup calculation. The contents of the step S17 is explained in detail in FIG. 12.

<Main Processing by External Control Apparatus>

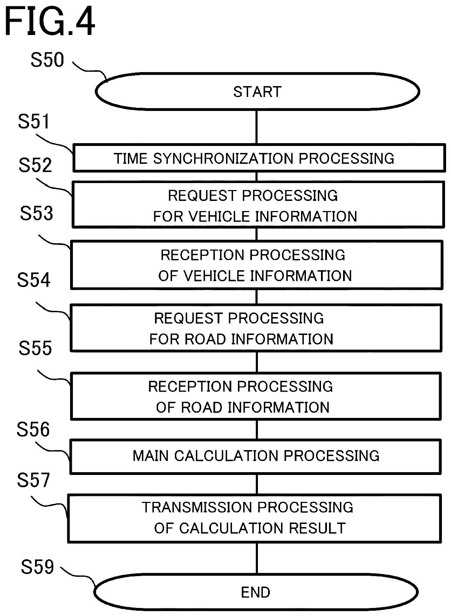

FIG. 4 is a flowchart of main processing by the external control apparatus 10 according to Embodiment 1. The computing processing unit 90 provided in the external control apparatus 10 executes software items represented in the flowchart. The main routine is executed every predetermined time (e.g., 1 ms). It may be allowed that the main routine is executed not every predetermined time but at each time of events such as reception interruption and transmission interruption of the external control apparatus 10.

The main processing is started at the step S50; then, in the step S51, communication with the vehicle-mounted control apparatus 20 is performed, so that time synchronization processing is executed. The contents of the step S51 are the same as the contents of the step S12 and the details thereof represented in FIG. 6. In the step S52, a request for vehicle information is transmitted to the vehicle-mounted control apparatus 20.

In the step S53, the vehicle information is received from the vehicle-mounted control apparatus 20. The contents of the step S53 is explained in detail in FIG. 8. In the step S54, the external control apparatus 10 issues a request for road information to the road monitoring apparatus 40. In the step S55, the external control apparatus 10 receives the road information from the road monitoring apparatus 40. In the step S56, the calculation unit 13 performs a main calculation based on the vehicle information and the road information.

In this situation, it may be allowed that the main calculation is suspended until new vehicle information or new road information can be obtained after a main calculation has been immediately previously performed. Moreover, it is made possible to adopt a specification in which although no new information can be obtained, the main calculation is recurrently performed.

After the main calculation is ended, the calculation result is stored in a calculation storage unit. Then, a calculation end flag is raised so as to prepare the next calculation.

In the case where the vehicle control system 101 includes the road monitoring apparatus 40, as a constituent element, a main calculation is performed based on both vehicle information and road information; thus, the main calculation can be performed based on more information items than a backup calculation by the vehicle-mounted control apparatus 20 can. Accordingly, the main calculation can realize more appropriate guidance for the automatic driving vehicle. In the case where the vehicle control system 101 does not include the road monitoring apparatus 40, the steps S54 and S55 can be omitted. In that case, in the step S56, the calculation unit 13 performs a main calculation based on vehicle information.

In the step S57, the external control apparatus 10 transmits the calculation result to the vehicle-mounted control apparatus 20. The contents of the step S57 is explained in detail in FIG. 9. After that, the processing is ended in the step S59.

<Processing Items 1 Performed by Vehicle-Mounted Control Apparatus>

<Preliminary Processing>

FIG. 5 represents the details of the step S11 related to preliminary processing. The processing is started at the step S111; then, in the step S112, it is confirmed whether or not the software has been initialized or updated. When the vehicle-mounted control apparatus 20 is activated for the first time after being installed or when the software has been updated (the determination result is YES), the step S112 is followed by the step S113. In other cases (the determination result is NO), the processing is ended in the step S119.

In the step S113, the validity period of vehicle information is registered in the time confirmation processing unit 28 of the vehicle-mounted control apparatus 20. The vehicle information creation unit 32 obtains vehicle control information to be outputted from the vehicle control unit 24 and sensor information to be outputted from the sensor 25 so as to output vehicle information. The validity period of the vehicle information is registered as a first time range Pvi1.

In the step S114, a delay allowable time Pcal1 after the result of the main calculation by the external control apparatus 10 is transmitted is registered, as a second time range Pcal1, in the time confirmation processing unit 28 of the vehicle-mounted control apparatus 20. The processing is ended in the step S119.

<Time Synchronization Processing>

FIG. 6 represents the details of the step S12 related to time synchronization. The processing is started at the step S121; then, in the step S122, it is determined whether initial connection or synchronization update is performed. In the case where initial connection or synchronization update is performed (the determination result is YES), the step S122 is followed by the step S123. In the case where neither initial connection nor synchronization update is performed (the determination result is NO), the processing is ended in the step S129.

In the case where after the operation by the vehicle-mounted control apparatus 20 is started, the vehicle-mounted control apparatus 20 and the external control apparatus 10 perform the initial connection or update the synchronization, time synchronization between the vehicle-mounted time synchronization unit 27 of the vehicle-mounted control apparatus 20 and the time synchronization unit 14 of the external control apparatus 10 is performed in the step S123. The time synchronization in this case may be a mechanism performed through a general NTP (Network Time Protocol). After the time synchronization is performed, the vehicle-mounted control apparatus 20 registers, in the step S124, the time difference between the external control apparatus 10, which is a MEC server, and itself. After that, the processing is ended in the step S129.

In addition, in the step S122, the validity period of time synchronization between the vehicle-mounted control apparatus 20 and the external control apparatus 10 and conditions of handover and the like are set; in the case where the conditions are satisfied, the time synchronization, as synchronization update, is performed in the step S123.

<vehicle-information transmission processing>

FIG. 7 represents the details of the step S13 related to vehicle-information transmission processing. Processing of data transmission from the vehicle-mounted control apparatus 20 to the external control apparatus 10 is performed when the transmission unit 21 of the vehicle-mounted control apparatus 20 receives a vehicle-information transmission request. The processing is started at the step S131; then, in the step S132, it is determined whether or not the vehicle-information transmission request exists. In the case where the vehicle-information transmission request exists (the determination result is YES), the step S132 is followed by the step S133. In the case where no vehicle-information transmission request exists (the determination result is NO), the processing is ended in the step S139.

In the step S133, the vehicle-mounted time information attachment/detachment unit 26 obtains the present time from the vehicle-mounted time synchronization unit 27. After receiving the present time, the vehicle-mounted time information attachment/detachment unit 26 attaches the present time, as the first time information, to the vehicle information received by the transmission unit 21.

In the step S134, to the external control apparatus 10, the transmission unit 21 transmits the vehicle information to which the first time information has been attached. The processing is ended in the step S139.

<Processing Items Performed by External Control Apparatus>

<Vehicle-Information Reception Processing>

FIG. 8 represents the details of the step S53 related to vehicle-information reception processing by the external control apparatus 10. The processing is started at the step S531; then, in the step S532, it is determined whether or not vehicle information has been received. In the case where the first data reception unit 11 of the external control apparatus 10 has received the vehicle information from the vehicle-mounted control apparatus 20 (the determination result is YES), the step S532 is followed by the step S533; in the case where the first data reception unit 11 of the external control apparatus 10 has not received the vehicle information from the vehicle-mounted control apparatus 20 (the determination result is NO), the step S532 is followed by the step S539, where the processing is ended.

In the step S533, the time information attachment/detachment unit 15 detaches vehicle time information (the first time information) from the vehicle information. In the step S534, the detached vehicle time information (the first time information) is stored. In the step S535, the vehicle information (the first time information) is provided to the calculation unit 13. The processing is ended in the step S539.

transmission of Main-Calculation Result>

FIG. 9 represents the details of the step S57 related to transmission of a main-calculation result. The processing is started at the step S571; then, in the step S572, whether or not the main calculation has been ended is determined by confirming a calculation end flag. In the case where the main calculation has been ended (the determination result is YES), the step S572 is followed by the step S573; in the case where the main calculation has not been ended (the determination result is NO), the step S572 is followed by the step S579, where the processing is ended.

In the step S573, the time information attachment/detachment unit 15 obtains the present time (the second time information) of the external control apparatus 10 from the time synchronization unit 14 and then attaches the vehicle time information (the first time information) stored in the step S534 and the newly obtained present time (the second time information) to the calculation result at the calculation unit 13, stored in a calculation result storage unit.

In the step S574, the first data transmission unit 12 transmits the calculation result of the main calculation, to which the vehicle time information (the first time information) and the present time (the second time information) are attached to the calculation result at the calculation unit 13, to the vehicle-mounted control apparatus 20. The processing is ended in the step S579.

<Processing Items 2 Performed by Vehicle-Mounted Control Apparatus>

<Reception Processing for Main-Calculation Result>

FIG. 10 represents the details of the step S15 related to reception processing for a main-calculation result. The processing is started at the step S151; then, in the step S152, it is determined whether or not the reception unit 22 of the vehicle-mounted control apparatus 20 has received the result of a main calculation from the external control apparatus 10. In the case where the reception unit 22 of the vehicle-mounted control apparatus 20 has received the result of a main calculation (the determination result is YES), the step S152 is followed by the step S153. In the case where the reception unit 22 of the vehicle-mounted control apparatus 20 has not received the result of a main calculation (the determination result is NO), the step S152 is followed by the step S159, where the processing is ended.

In the step S153, the vehicle-mounted time information attachment/detachment unit 26 separates the calculation result, the first time information, and the second time information from the received result of the main calculation. In the step S154, the separated first time information and second time information are provided to the time confirmation processing unit 28. The processing is ended in the step S159.

<Time Confirmation Processing>

FIG. 11 represents the details of the step S16 related to time confirmation processing. The processing is started at the step S161; then, in the step S162, it is determined whether or not the first time information and the second time information have been provided from the vehicle-mounted time information attachment/detachment unit 26. In the case where the first time information and the second time information have been provided (the determination result is YES), the step S162 is followed by the step S163. In the case where the first time information and the second time information have not been provided (the determination result is NO), the processing is ended in the step S169.

In the step S163, when the first time information and the second time information are provided, as T1 and T2, respectively, the time confirmation processing unit 28 obtains the present time TR from the vehicle-mounted time synchronization unit 27 of the vehicle. Next, the difference between the first time information T1 and the second time information T2 is obtained, as a vehicle-time-information deference TR - T1. Then, the obtained vehicle-time-information deference is compared with the first time range Pvi1 registered in the step S113. When the vehicle-time-information deference TR - T1 is smaller than the first time range Pvi1, the inequality below is established.

$$TR - T1 < Pvi1$$

In the case where [TR - T1 < Pvi1] is established (the determination result is YES), the step S163 is followed by the step S164. In the case where[TR - T1 < Pvi1] is not established (the determination result is NO), the step S163 is followed by the step S166, where it is stored that the result of the main calculation exceeds the time limit and hence is not allowed. It can be determined that the calculation result based on vehicle information at a time when an excessive time has elapsed is not utilized.

Next, in the step S164, the difference between the obtained second time information T2 and the present time TR is obtained, as a vehicle-time-information deference TR - T2. Then, the obtained vehicle-time-information deference is compared with the second time range Pcal1 registered in the step S114. When the vehicle-time-information deference TR - T2 is smaller than the second time range Pcal1, the inequality below is established.

$$TR - T2 < Pcal1$$

In the case where [TR - T1 < Pcal1] is established (the determination result is YES), the step S164 is followed by the step S165. It suggests that the result of the main calculation does not exceed the time limit and hence is allowed. In the case where [TR - T1 < Pcal1] is not established (the determination result is NO), the step S164 is followed by the step S166 because the time limit does not allow; in the step S166, it is stored that the result of the main calculation exceeds the time limit and hence is not allowed. It can be determined that the calculation result at a time when an excessive time has elapsed from the transmission is not utilized.

In the step S165, it is stored that the result of the main calculation does not exceed the time limit and hence is allowed. The processing is ended in the step S169.

<Switching Processing for Calculation Result>

FIG. 12 represents the details of the step S17 related to switching processing for calculation result. The processing is started at the step S171; then, in the step S172, it is determined whether or not the result of the main calculation has been received. In the case where the result of the main calculation has been received (the determination result is YES), the step S172 is followed by the step S173. In the case where the result of the main calculation has not been received (the determination result is NO), the step S172 is followed by the step S179, where the processing is ended. When the result of the main calculation has not been received, it is not required to determine whether or not the result of the main calculation can be allowed.

In the step S173, it is determined whether or not the result of the main calculation is within the allowable range of the time limit. The foregoing determination is performed based on whether or not after the time confirmation processing in FIG. 11, it has been stored that the result of the main calculation exceeds the time limit and hence is not allowed. In the case where the time limit allows (the determination result is YES), the step S173 is followed by the step S174. In the case where the time limit does not allow (the determination result is NO), the step S173 is followed by the step S175.

In the step S174, the result of the main calculation is set in the vehicle control unit 24. This is because the vehicle is controlled based on the result of the main calculation.

In the step S175, the result of the backup calculations is set in the vehicle control unit 24. This is because the vehicle is controlled based on the result of the backup calculations.

In the step S176, the vehicle control unit 24 performs vehicle control. As a result, the electric rotating machine, the switching circuit, the actuator, and the like of the vehicle-control loads 31 are driven, so that the driving power, the steering power, the braking power, and the like of the automatic driving vehicle are controlled. The processing is ended in the step S179.

<Other Time Confirmation Processing Items>

In the foregoing time confirmation processing, the time information at a time of transmission by the transmission unit 21 of the vehicle-mounted control apparatus 20 is attached, as the first time information, to the vehicle information. Then, the first time information T1, which has been attached to the result of the main calculation and has been received by the reception unit 22, is separated by the vehicle-mounted time information attachment/detachment unit 26 and is compared with the present time TR; in the case where the difference is not smaller than the first time range Pvi1, it is determined that the time limit is exceeded, and hence the vehicle control unit 24 controls the automatic driving vehicle based on the result of the backup calculation instead of the result of the main calculation.

Moreover, in the foregoing time processing, the result of the main calculation, to which the second time information T2 related to the time when the external control apparatus 10 transmits the result of the main calculation has been attached, is transmitted to the vehicle-mounted control apparatus 20. Then, the second time information T2, which has been attached to the result of the main calculation and has been received by the reception unit 22, is separated by the vehicle-mounted time information attachment/detachment unit 26 and is compared with the present time TR; in the case where the difference is not smaller than the second time range Pcal1, it is determined that the time limit is exceeded, and hence the vehicle control unit 24 controls the automatic driving vehicle based on the result of the backup calculation instead of the result of the main calculation.

It may be allowed that instead of the first time information T1, a third time information T3 (not represented) related to the time when the vehicle information creation unit 32 of the vehicle-mounted control apparatus 20 creates vehicle information is attached to the vehicle information and is transmitted to the external control apparatus 10. The third time information T3, which has been attached to the result of the main calculation and has been received by the reception unit 22, is separated by the vehicle-mounted time information attachment/detachment unit 26 and is compared with the present time TR; in the case where the difference is not smaller than a third time range Pvi2 (not represented), it may be determined that the time limit is exceeded. In that case, the vehicle control unit 24 controls the automatic driving vehicle based on the result of the backup calculation instead of the result of the main calculation.

It may be allowed that instead of the second time information T2, a fourth time information T4 (not represented) related to the time when the external control apparatus 10 performs the main calculation is attached to the vehicle information and is transmitted to the vehicle-mounted control apparatus 20. The fourth time information T4, which has been attached to the result of the main calculation and has been received by the reception unit 22, is separated by the vehicle-mounted time information attachment/detachment unit 26 and is compared with the present time TR; in the case where the difference is not smaller than a fourth time range Pcal2 (not represented), it may be determined that the time limit is exceeded. In that case, the vehicle control unit 24 controls the automatic driving vehicle based on the result of the backup calculation instead of the result of the main calculation.

It is only necessary that the processing items in which the first time information T1, the second time information T2, the first time range Pvi1, and the second time range Pcal1 are provided instead of the third time information T3, the fourth time information T4, the third time range Pvi2, and the fourth time range Pcal2 are replaced by the processing items in which in FIG. 5 and FIGS. 7 through 11, the third time information T3, the fourth time information T4, the third time range Pvi2, and the fourth time range Pcal2 are provided instead of the first time information T1, the second time information T2, the first time range Pvi1, and the second time range Pcal1.

Accordingly, it can be determined whether or not the result of the main calculation by the external control apparatus 10 of the vehicle-mounted control apparatus 20 is effective, based on the criterion whether or not it is satisfied that the vehicle information within the allowable time is utilized and the calculation delay time is allowable. In the case where the allowable condition is satisfied, the vehicle is controlled based on the result of the calculation by the external apparatus and in the case where the allowable condition is not satisfied, the vehicle is controlled by use of the result of the calculation by the vehicle-mounted control apparatus; therefore, the vehicle can continue stable traveling.

2. Embodiment 2

<Configuration of Vehicle-Mounted Control Apparatus>

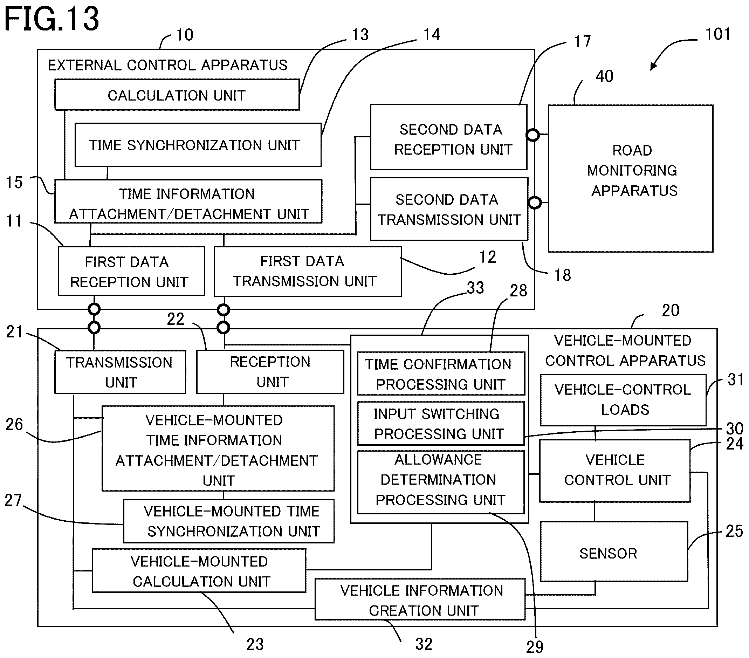

FIG. 13 is a diagram representing the configuration of the vehicle control system 101 according to Embodiment 2. The basic configuration is the same as that of Embodiment 1; the difference exists in that an allowance determination processing unit 29 is added to the vehicle-mounted control apparatus 20. The allowance determination processing unit 29 can not only be configured with hardware but also be configured as a function of software. Accordingly, as having the same hardware configuration, the vehicle control system according to Embodiment 2 is described as the vehicle control system 101.

The allowance determination processing unit 29 is a processing unit that compares the result of the main calculation, which is outputted by the calculation unit 13 and is received from the external control apparatus 10, with the result of the backup calculation, outputted by the vehicle-mounted calculation unit 23 of the vehicle-mounted control apparatus 20, and then determines whether or not the result of the main calculation in the external control apparatus 10 is within an allowable range.

<Flowchart of Main Processing by Vehicle-Mounted Control Apparatus>

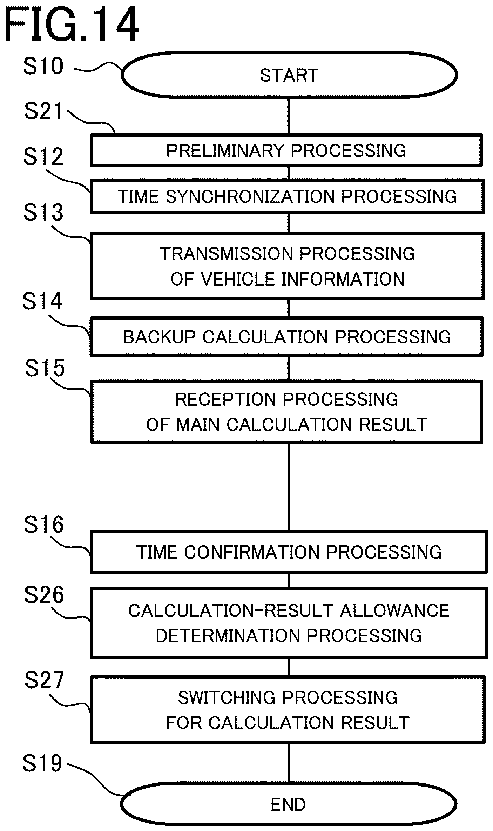

FIG. 14 is a flowchart of main processing by the vehicle-mounted control apparatus 20 according to Embodiment 2. The flowchart of main processing according to Embodiment 2 is different from the flowchart of main processing in FIG. 3 according to Embodiment 1 only in that instead of the preliminary processing in the step S11, the preliminary processing in the step S21 is provided, that the calculation-result allowance determination processing in the step S26 is added, and that instead of the calculation-result switching processing in the step S17, the calculation-result switching processing in the step S27 is provided. Hereinafter, only the different points will be explained.

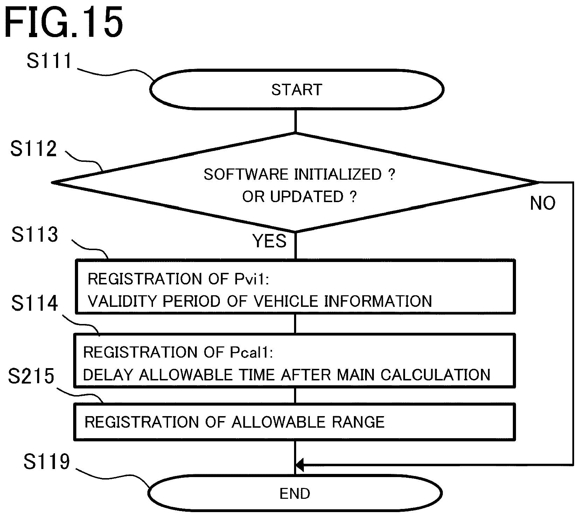

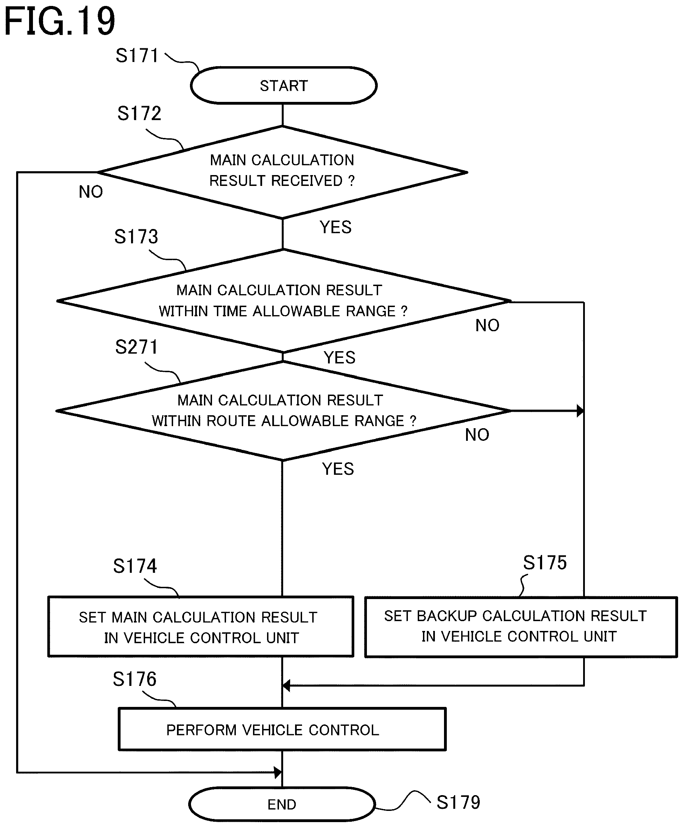

The preliminary processing in the step S21 has no change in the general function. The details thereof are represented in FIG. 15. The calculation-result switching processing in the step S27 has no change in the general function. The details thereof are represented in FIG. 19.

The allowance determination processing in the step S26 is the processing that determines, based on a criterion different from that in Embodiment 1, whether or not the result of the main calculation in the external control apparatus 10 is within an allowable range. Specifically, the allowance determination processing confirms whether or not a traveling route calculated through the main calculation can physically be allowed, whether or not the amount of displacement from the immediately previously created traveling route exceeds an allowable range, and whether or not the collision margin time in the created traveling route is within an appropriate range.

<Preliminary Processing>

FIG. 15 is a flowchart of preliminary processing by the vehicle-mounted control apparatus 20 according to Embodiment 2 and explains the contents of the step S21 in FIG. 14. The flowchart in FIG. 15 is different from the flowchart of the preliminary processing in FIG. 5 according to Embodiment 1 in that the step S215 is added.

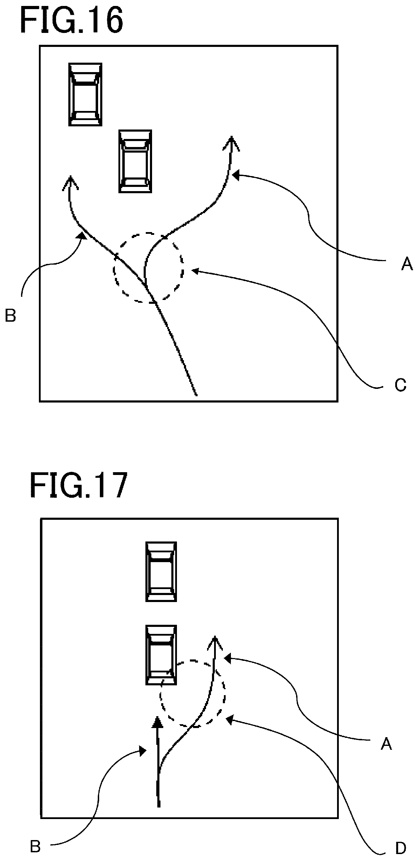

The step S215 in FIG. 15 is performed at a time of initialization or update of software. The step S215 is processing for preliminarily registering an allowable range and represents that the allowance determination processing unit 29 of the vehicle-mounted control apparatus 20 registers the allowable range. The registration contents of the allowable range includes, for example, the speed, the acceleration, and the differential value of the acceleration on the traveling route outputted by the external control apparatus 10, the allowable value of the amount of displacement between the traveling route created as the result of the main calculation and the traveling route created as the result of the backup calculation, the allowable value of the margin time of collision with a neighboring vehicle on the traveling route created as the result of the main calculation, and the like. Each of FIGS. 16 and 17 represents an example of the allowable range.

The "A" portion represented by an arrow in FIG. 16 indicates the traveling route created as the result of the main calculation by the external control apparatus 10. The "B" portion represented by an arrow indicates the traveling route created as the result of the backup calculation by the vehicle-mounted control apparatus 20. The "C" portion represented by an arrow indicates the allowable value of the amount of displacement between the both traveling routes.

The "A" portion represented by an arrow in FIG. 17 indicates the traveling route created as the result of the main calculation by the external control apparatus 10. The "B" portion represented by an arrow indicates the traveling route created as the result of the backup calculation by the vehicle-mounted control apparatus 20. The "D" portion represented by an arrow indicates the margin time of collision between the traveling route created by the external control apparatus 10 and a neighboring vehicle.

<Flowchart of Calculation-Result Allowance Determination Processing>

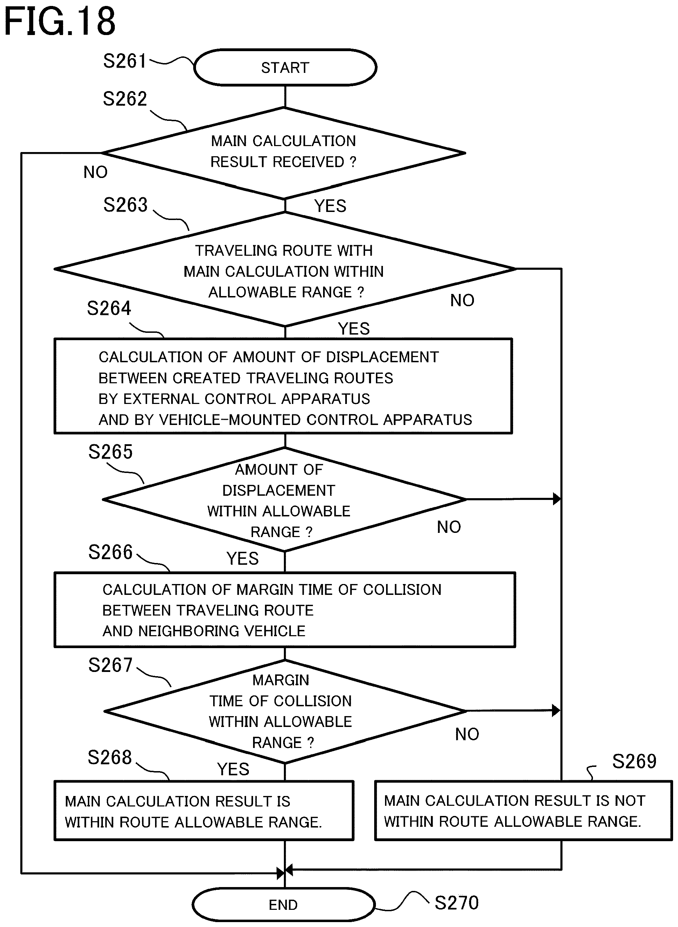

FIG. 18 is a flowchart of calculation-result allowance determination processing by the vehicle-mounted control apparatus according to Embodiment 2 and explains the contents of the step S26 in FIG. 14. The processing is started at the step S261; then, in the step S262, it is confirmed whether or not the result of the main calculation has been received from the external control apparatus 10. In the case where the result of the main calculation has been received (the determination result is YES), the step S262 is followed by the step S263. In the case where the result of the main calculation has not been received (the determination result is NO), the step S262 is followed by the step S270, where the processing is ended. This is because when the result of the main calculation has not been received, it is not required to determine whether or not the result of the main calculation can be allowed.

In the step S263, it is confirmed whether or not the traveling route created through the main calculation is within the registered allowable range. It is determined whether or not the traveling route is within the allowable range, for example, whether or not the traveling route is oriented to a travelable direction, whether or not the traveling speed is too high or too low, and whether or not the acceleration or the differential value of the acceleration, with which the traveling is instructed, is too large are determined.

In the case where the created traveling route is within the allowable range (the determination result is YES), the step S263 is followed by the step S264. In the case where the created traveling route is not within the allowable range (the determination result is NO), the step S263 is followed by the step S269, where it is determined that the result of the main calculation is out of the route allowable range, and then the determination result is stored. After that, the processing is ended in the step S270.

In the step S264, there is calculated the amount of displacement between the traveling route created by the vehicle-mounted control apparatus 20 and the traveling route created by the external control apparatus 10. In the step S265, it is confirmed whether or not the amount of displacement is within the registered allowable range. In the case where the amount of displacement is within the allowable range (the determination result is YES), the step S265 is followed by the step S266. In the case where the amount of displacement is not within the allowable range (the determination result is NO), the step S265 is followed by the step S269.

In the step S266, there is calculated the margin time of collision between the traveling route created by the external control apparatus 10 and a neighboring vehicle recognized by the vehicle-mounted calculation unit 23 of the vehicle-mounted control apparatus 20. In the step S267, it is confirmed whether or not the margin time of collision is within the registered allowable range.

In the case where the collision margin time is within the allowable range (the determination result is YES), the step S267 is followed by the step S268, where it is determined that the result of the main calculation is within the route allowable range, and the determination result is stored. After that, the processing is ended in the step S270. In the case where the collision margin time is not within the allowable range (the determination result is NO), the step S267 is followed by the step S269.

<Flowchart of Calculation-Result Switching Processing>

FIG. 19 is a flowchart of calculation-result switching processing by the vehicle-mounted control apparatus 20 according to Embodiment 2. The flowchart in FIG. 19 is different from the flowchart of the calculation-result switching processing in FIG. 12 according to Embodiment 1 in that the step S271 is added.

In the step S271, it is determined whether or not the result of the main calculation can be allowed. In the case where in the calculation-result allowance determination processing in FIG. 18, the result of the main calculation is within the route allowable range (the determination result is YES), the step S271 is followed by the step S174, where the result of the main calculation is set in the vehicle control unit 24. In the case where the result of the main calculation is not within the route allowable range (the determination result is NO), the step S271 is followed by the step S175, where the result of the backup calculation is set in the vehicle control unit 24.

As described above, in the case where the calculation result of the calculation unit 13 in the external control apparatus 10 includes contents that exceed a predetermined allowable range, a check at the vehicle-mounted control apparatus 20 side makes it possible to determine that the calculation result of the external control apparatus 10 cannot be utilized; in the case where it is determined that the calculation result of the external control apparatus 10 cannot be utilized, vehicle control is performed based on the result of the backup calculation by the vehicle-mounted control apparatus 20, so that the vehicle can be made to stably travel.

In addition, in Embodiment 2, there has been described an example in which the results obtained by the time confirmation processing unit 28 in Embodiment 1 are combined; however, the calculation-result switching may be performed based on a configuration in which no results in Embodiment 1 are combined.

In Embodiment 2, there has been described an example in which the subjects to be switched by the input switching processing unit 30 are traveling routes that are provided to the vehicle control unit 24; however, the subjects to be switched by the input switching processing unit 30 are not limited thereto. For example, it may be allowed that the results of surrounding recognition for creating a traveling route in the vehicle-mounted calculation unit 23 are switched.

## 3. Embodiment 3

In terms of a driver's feeling of security, it is desirable that inputs are prevented from being frequently switched by the input switching processing unit 30 and are smoothly switched.

In the case where the communication environment is not necessarily satisfactory, the calculation result of the external control apparatus 10 may intermittently reach the vehicle-mounted control apparatus 20. Switching at each time of arrival of the calculation result of the external control apparatus 10 causes frequent switching between the traveling route, as the calculation result of the external control apparatus 10 and the traveling route, as the calculation result of the vehicle-mounted control apparatus 20. As measures for preventing the foregoing frequent switching, a condition at a time of switching the calculation results is provided. For example, the condition may be that the calculation result of the external control apparatus 10 continues to be within an allowable range for a specified period.

Moreover, it may be allowed that in the case where whether or not the allowable condition is established is maintained for a predetermined determination time, the vehicle control unit 24 of the vehicle-mounted control apparatus 20 switches the basic calculation result for controlling the vehicle, from the result of the backup calculation to the result of the main calculation or vice versa.

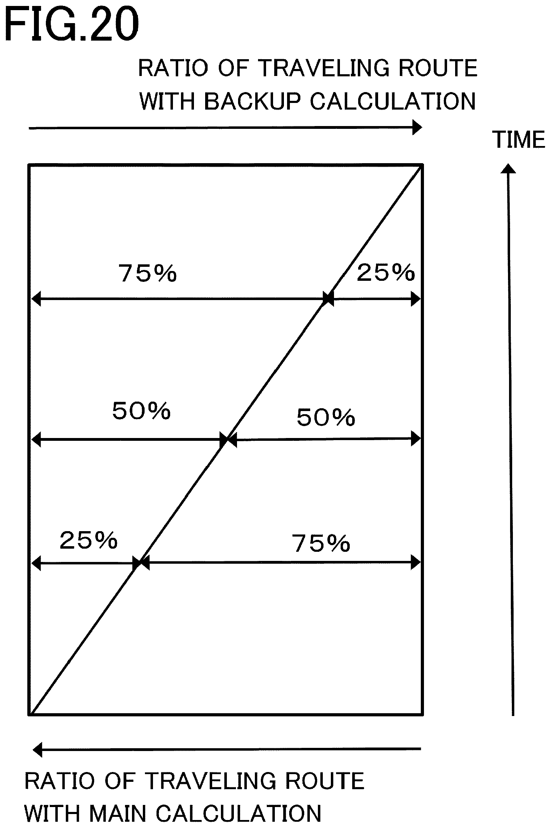

Furthermore, for example, in the case where when the communication is interrupted, there exists a difference between a traveling route that has been calculated by the external control apparatus 10 and has been utilized till the interruption and an after-switching traveling route calculated in the vehicle, a change in the behavior of the vehicle becomes large in accordance with the difference. In that case, in order to perform smooth switching, the traveling routes are gradually switched taking a middle value at a time when the rate of both traveling routes are variable with time, as represented in FIG. 20.

Accordingly, even in the case where the communication environment is not necessarily satisfactory, not only frequent switching but also drastic switching can be prevented; therefore, the feeling of security can be provided to the driver.

## 4. Embodiment 4

In the case where the communication environment is not necessarily satisfactory, the calculation results of the external control apparatus 10 may reach the vehicle-mounted control apparatus 20 with the order thereof reversed. Moreover, the calculation results of the external control apparatus 10 that arrive with the order thereof reversed may satisfy the condition in each of Embodiments 1 and 2. However, it is undesirable that the vehicle-mounted control apparatus 20 is controlled by the calculation results in the reverse order.

Moreover, it may be adopted, as a predetermined condition, that the first time information T1 or the second time information T2 attached to the result of the main calculation, received from the external control apparatus 10, indicates a time later than the immediately previous first time information T1old or the immediately previous second time information T2old attached to the immediately previous result of the main calculation, received from the external control apparatus 10. It can be determined that no old calculation result received at later timing is utilized. Moreover, it may be allowed that even when the order of the respective time information pieces are reversed, neither is the particular result of the main calculation utilized nor is switching to the control based on the result of the backup calculation performed.

Furthermore, it may be adopted, as a predetermined condition, that the third time information T3 or the fourth time information T4 attached to the result of the main calculation received from the external control apparatus 10 indicates a time later than the immediately previous third time information T3old or the immediately previous fourth time information T4old attached to the immediately previous result of the main calculation received from the external control apparatus 10. It can be determined that no old calculation result received at later timing is utilized. Moreover, it may be allowed that even when the order of the respective time information pieces are reversed, neither is the particular result of the main calculation utilized nor is switching to the control based on the result of the backup calculation performed (T3, T3old, T4, and T4old are not represented).

<Flowchart of Main Processing by Vehicle-Mounted Control Apparatus>

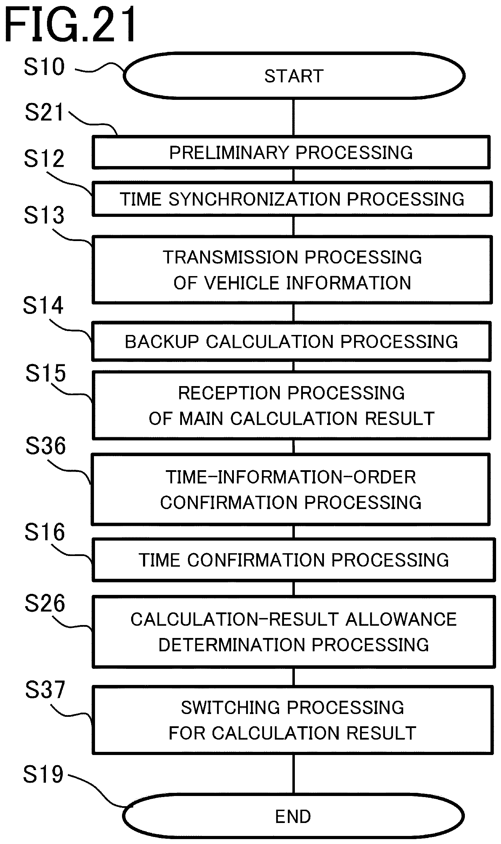

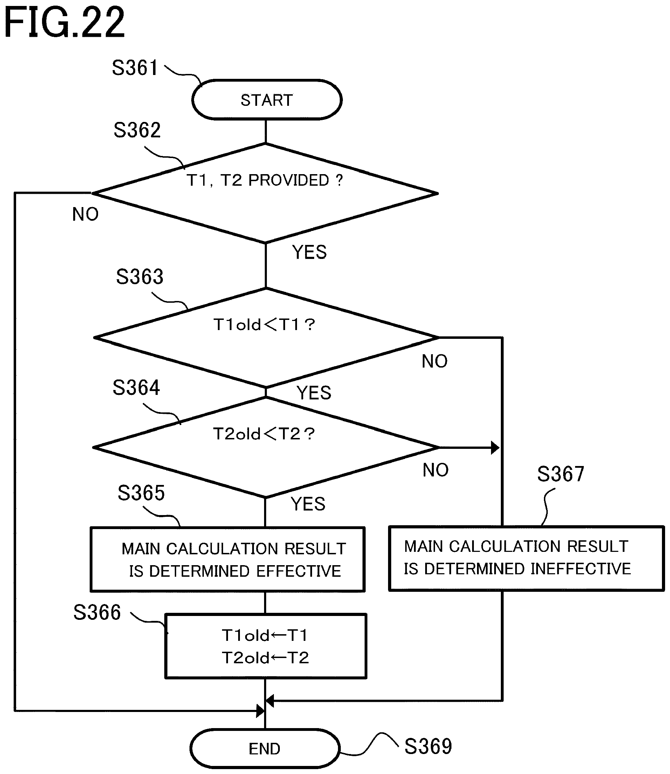

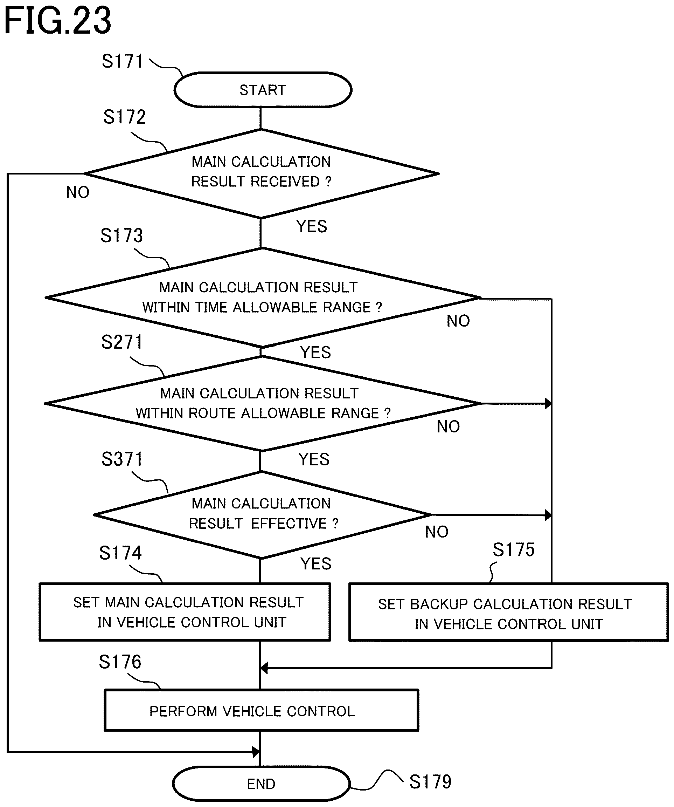

FIG. 21 is a flowchart of main processing by the vehicle-mounted control apparatus 20 according to Embodiment 4. The flowchart in FIG. 21 is different from the flowchart of the main processing in FIG. 14 according to Embodiment 2 in that the step S36 is added and in that instead of the calculation-result switching processing in the step S27, the calculation-result switching processing in the step S37 is provided. The details of the step S36 is represented in FIG. 22. The details of the step S37 is represented in FIG. 23.

<Flowchart of Time-Information-Order Confirmation Processing by Vehicle-Mounted Control Apparatus>

FIG. 22 is a flowchart of time-information-order confirmation processing by the vehicle-mounted control apparatus 20 according to Embodiment 4. FIG. 22 represents the details of the step S36 in FIG. 21. The processing is started at the step S361; then, in the step S362, it is determined whether or not the first time information T1 and the second time information T2 have been provided from the vehicle-mounted time information attachment/detachment unit 26. In the case where the first time information T1 and the second time information T2 have been provided (the determination result is YES), the step S362 is followed by the step S363. In the case where the first time information T1 and the second time information T2 have not been provided (the determination result is NO), the processing is ended in the step S369.

In the step S363, the immediately previous first time information T1old and the present first time information T1 are compared with each other and it is determined whether or not the present first time information T1 is larger than the immediately previous first time information T1old (the larger the time is, the newer the time is). In the case where the present first time information T1 is larger than the immediately previous first time information T1old (the determination result is YES), the step S363 is followed by the step S364. In the case where the present first time information T1 is not larger than the immediately previous first time information T1old (the determination result is NO), the step S363 is followed by the step S367, it is determined that the result of the main calculation is ineffective, and then the result is stored. After that, the processing is ended in the step S369.

In the step S364, the immediately previous second time information T2old and the present second time information T2 are compared with each other and it is determined whether or not the present second time information T2 is larger than the immediately previous second time information T2old (the larger the time is, the newer the time is). In the case where the present second time information T2 is larger than the immediately previous second time information T2old (the determination result is YES), the step S364 is followed by the step S365. In the case where the present second time information T2 is not larger than the immediately previous second time information T2old (the determination result is NO), the step S364 is followed by the step S367, it is determined that the result of the main calculation is ineffective, and then the result is stored. After that, the processing is ended in the step S369.

In the step S365, it is determined that the result of the main calculation is effective, and then the result is stored. In the step S366, the present first time information T1 is stored, as the immediately previous first time information T1old, so as to be utilized next time, as the immediately previous first time information T1old. The present second time information T2 is stored, as the immediately previous second time information T2old, so as to be utilized next time, as the immediately previous second time information T2old. After that, the processing is ended in the step S369.

<Switching Processing for Calculation Result>

FIG. 23 is a flowchart of calculation-result switching processing by the vehicle-mounted control apparatus 20 according to Embodiment 4. FIG. 23 represents the details of the step S37 in FIG. 21. The flowchart in FIG. 23 is different from the flowchart in FIG. 19 according to Embodiment 2 only in that the step S371 is additionally provided.

In the step S371 in FIG. 23, it is confirmed whether or not the result of the main calculation is effective. It is confirmed whether or not the calculation result determined and stored in FIG. 22 is effective. In the case where the calculation result is effective (the determination result is YES), the result of the main calculation is set in the vehicle control unit 24 in the step S174. In the case where the calculation result is not effective (the determination result is NO), the result of the main calculation is not utilized; then, in the step S179, the result of the backup calculation is set in the vehicle control unit 24.

In FIG. 23, in the case where the order of the time information of the result of the main calculation that has been received immediately previously is reversed, it is determined that the result of the main calculation is ineffective; then, the control by the vehicle control unit 24 based on the result of the main calculation is switched to the control by the vehicle control unit 24 based on the result of the backup calculation. However, in this case, as far as the result of the main calculation received from the external control apparatus 10 is concerned, only the order of the time information is reversed. As long as the data is not out of the allowable range, it is only necessary to neglect the result of the main calculation; in many cases, it is not required to switch the control by the vehicle control unit 24 based on the result of the main calculation to the control by the vehicle control unit 24 based on the result of the backup calculation. Accordingly, it may be allowed that in the case where in FIG. 23, the calculation result is not effective (the determination result is NO), the step S371 is followed by the step S179, where the processing is ended.

In FIG. 22, there has been explained an example where the order of the first time information T1 and the second time information T2 is reversed; this explanation can be applied also to the case where the time order of the third time information T3 and the fourth time information T4 is determined.

The configuration according to Embodiment 4 makes it possible that the data whose time is reversed is determined to be ineffective and is not utilized; thus, the reliability is raised.

5. Embodiment 5

The vehicle-mounted control apparatuses 20 of two or more vehicles can be connected with the external control apparatus 10. Accordingly, the external control apparatus 10 can perform the main calculation related to the vehicle-mounted control apparatus 20 by use of not only the vehicle information transmitted from the particular vehicle but also the vehicle information pieces from the other vehicles . In that case, because the number of usable data pieces increases, a more appropriate main calculation can be performed.

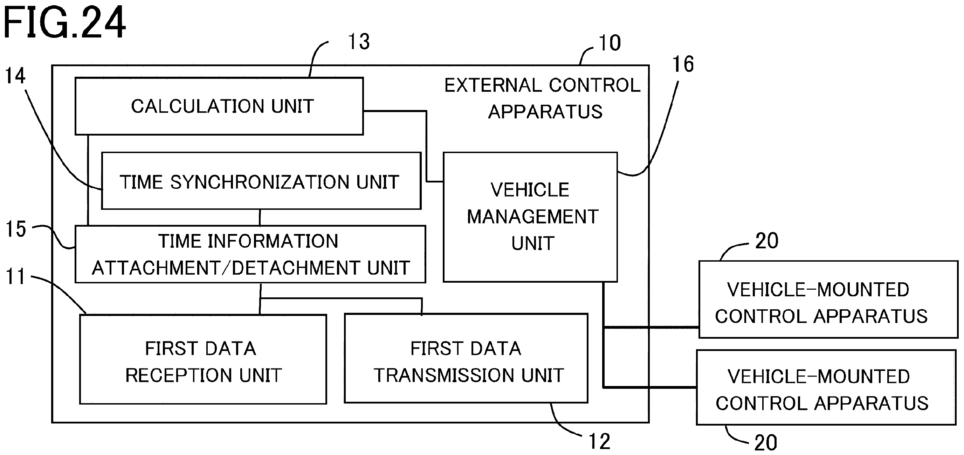

FIG. 24 represents the case where a vehicle management unit 16 is provided in the external control apparatus 10. In the present embodiment, positional information pieces of all the vehicle-mounted control apparatuses 20 connected with the external control apparatus 10 and vehicle information pieces from the connected vehicle-mounted control apparatuses 20 are stored. In the case where the vehicle information arrivals from each of the vehicle-mounted control apparatuses 20 and then update of the surrounding recognition and creation of the traveling route for the particular vehicle are performed, the calculation unit 13 refers to other vehicle information pieces, from the vehicle management unit 16, in the surrounding of the particular vehicle, and then executes the update of the surrounding recognition and the creation of the traveling route.

As a result, it is made possible to obtain a high-function and high-performance result from the vehicle-mounted calculation unit 23 of the vehicle-mounted control apparatus 20.

Although the present application is described above in terms of various exemplary embodiments and implementations, it should be understood that the various features, aspects and functions described in one or more of the individual embodiments are not limited in their applicability to the particular embodiment with which they are described, but instead can be applied, alone or in various combinations to one or more of the embodiments. Therefore, an infinite number of unexemplified variant examples are conceivable within the range of the technology disclosed in the specification of the present disclosure. For example, at least one of the constituent components may be modified, added, or eliminated; moreover, at least one of the constituent components mentioned in at least one of the preferred embodiments may be selected and combined with the constituent components mentioned in another preferred embodiment.

Description of Reference Numerals

10: external control apparatus
13: calculation unit
14: time synchronization unit
15: time information attachment/detachment unit
16: vehicle management unit
20: vehicle-mounted control apparatus
21: transmission unit
22: reception unit
23: vehicle-mounted calculation unit
24: vehicle control unit
26: vehicle-mounted time information attachment/detachment unit
27: vehicle-mounted time synchronization unit
28: time confirmation processing unit
29: allowance determination processing unit
30: input switching processing unit
32: vehicle information creation unit
33: determination unit
40: road monitoring apparatus
101: vehicle control system

**Claims**

1. A vehicle control system comprising:

an external control apparatus that performs a main calculation for controlling a vehicle; and
a vehicle-mounted control apparatus that is connected with the external control apparatus through a network and performs a backup calculation for controlling the vehicle,
wherein the vehicle-mounted control apparatus includes

a vehicle information creation unit that obtains respective information pieces inside and outside a vehicle and creates vehicle information,
a transmission unit that transmits the vehicle information to the external control apparatus,
a reception unit that receives a result of the main calculation from the external control apparatus,
a vehicle-mounted calculation unit that outputs a result of the backup calculation performed based on the vehicle information, and
a vehicle control unit that controls the vehicle based on the result of the main calculation, when the result of the main calculation satisfies a predetermined allowable condition, and that controls the vehicle based on the result of the backup calculation, unless the result of the main calculation satisfies the allowable condition, and
wherein the external control apparatus transmits the result of the main calculation, performed based on the vehicle information received from the transmission unit of the vehicle-mounted control apparatus, to the reception unit of the vehicle-mounted control apparatus.

2. The vehicle control system according to claim 1, wherein the external control apparatus transmits a result of the main calculation, performed based on the vehicle information received from the transmission unit of the vehicle-mounted control apparatus and a road information received from a road monitoring apparatus that monitors a road situation so as to create and transmit the road information, to the reception unit of the vehicle-mounted control apparatus.

3. The vehicle control system according to any one of claims 1 and 2, wherein each of the main calculation and the backup calculation is a calculation including at least one of update of vehicle-surrounding recognition and creation of a vehicle traveling route.

4. The vehicle control system according to any one of claims 1 through 3,

wherein the external control apparatus transmits the result of the main calculation, to which the first time information attached to the vehicle information received from the transmission unit of the vehicle-mounted control apparatus and the second time information related to a time when the result of the main calculation is transmitted are added, to the reception unit of the vehicle-mounted control apparatus,
wherein the transmission unit of the vehicle-mounted control apparatus transmits the vehicle information to which the first time information related to a time when the vehicle information is transmitted is attached, and
wherein the allowable condition of the vehicle control unit of the vehicle-mounted control apparatus is that both of the first time information and the second time information that are attached to a result of the main calculation received by the reception unit are within predetermined first time range and second time range, respectively, or at least one of the first time information and the second time information is within corresponding one of the predetermined first time range and second time range.

5. The vehicle control system according to claim 4, wherein the allowable condition of the vehicle control unit of the vehicle-mounted control apparatus is that both of the first time information and the second time information that are attached to a result of the main calculation received by the reception unit indicate respective corresponding times later than the immediately previous first time information and second time information attached to a result, of the immediately previous main calculation, that has been a basis of the immediately previous control of the vehicle, or at least one of the first time information and the second time information indicates a time later than corresponding one of the immediately previous first time information and second time information.

6. The vehicle control system according to any one of claims 1 through 3,

wherein the external control apparatus transmits a result of the main calculation, to which a third time information attached to the vehicle information received from the transmission unit of the vehicle-mounted control apparatus and a fourth time information related to a time when the main calculation is performed are attached, to the reception unit of the vehicle-mounted control apparatus,
wherein the transmission unit of the vehicle-mounted control apparatus transmits the vehicle information to which the third time information related to a time when the vehicle information has been created are attached, and
wherein the allowable condition of the vehicle control unit of the vehicle-mounted control apparatus is that both of the third time information and the fourth time information that are attached to the result of the main calculation received by the reception unit are within predetermined third time range and fourth time range, respectively, or at least one of the third time information and the fourth time information is within corresponding one of the predetermined third time range and fourth time range.

7. The vehicle control system according to claim 6, wherein the allowable condition of the vehicle control unit of the vehicle-mounted control apparatus is that both of the third time information and the fourth time information that are attached to a result of the main calculation received by the reception unit indicate respective corresponding times later than the immediately previous third time information and fourth time information attached to a result, of the immediately previous main calculation, that has been a basis of the immediately previous control of the vehicle, or at least one of the third time information and the fourth time information indicates a time later than corresponding one of the immediately previous third time information and fourth time information.

8. The vehicle control system according to any one of claims 1 through 7, wherein each of the external control apparatus and the vehicle-mounted control apparatus has a time synchronization means.

9. The vehicle control system according to any one of claims 1 through 8, wherein the allowable condition of the vehicle control unit of the vehicle-mounted control apparatus is that at least one of physical quantity in a created traveling route of the vehicle, a displacement amount of the created traveling route of the vehicle, and a margin time of collision with an object around the vehicle that are included in a result of the main calculation received by the reception unit is within corresponding one of predetermined ranges.

10. The vehicle control system according to any one of claims 1 through 9, wherein in the case where whether or not the allowable condition is established is maintained for a predetermined determination time, the vehicle control unit of the vehicle-mounted control apparatus switches a basic calculation result for controlling the vehicle from a result of the backup calculation to a result of the main calculation or vice versa.

11. The vehicle control system according to any one of claims 1 through 9, wherein in the case where whether or not the allowable condition is established is maintained for a predetermined determination time, the vehicle control unit of the vehicle-mounted control apparatus switches a basic calculation result for controlling the vehicle from a result of the backup calculation to a result of the main calculation.

12. The vehicle control system according to any one of claims 1 through 11, wherein in the case where in accordance with whether or not the allowable condition is established, a created vehicle traveling route included in a basic calculation result for controlling the vehicle is switched from a backup traveling route that is a result of the backup calculation to a main-calculation traveling route that is a result of the main calculation or vice versa, the vehicle control unit of the vehicle-mounted control apparatus controls the vehicle, based on a third traveling route for gradually changing an intermediate portion between the main-calculation traveling route and the backup traveling route.

13. The vehicle control system according to any one of claims 1 through 12, wherein based on the vehicle information received from the vehicle-mounted control apparatus, another vehicle information received from another vehicle-mounted control apparatus of another vehicle, and another-vehicle surrounding recognition and another-vehicle traveling route that are results of the main calculation performed based on the vehicle information and said another vehicle information, the external control apparatus performs the main calculation so as to update the vehicle-surrounding recognition or create the vehicle traveling route, and then transmits the result of the main calculation to the vehicle-mounted control apparatus.

# FIG.1

EP 4 242 999 A1

# FIG.2

CONTROL APPARATUS 10, 20

INPUT CIRCUIT 92

CPU 90

ROM 91

RAM 91

OUTPUT CIRCUIT 93

94

COMMUNICATION UNIT

# FIG.3

S10 — START

S11 — PRELIMINARY PROCESSING

S12 — TIME SYNCHRONIZATION PROCESSING

S13 — TRANSMISSION PROCESSING OF VEHICLE INFORMATION

S14 — BACKUP CALCULATION PROCESSING

S15 — RECEPTION PROCESSING OF MAIN CALCULATION RESULT

S16 — TIME CONFIRMATION PROCESSING

S17 — SWITCHING PROCESSING FOR CALCULATION RESULT

S19 — END

# FIG.4

S50 — START

S51 — TIME SYNCHRONIZATION PROCESSING

S52 — REQUEST PROCESSING FOR VEHICLE INFORMATION

S53 — RECEPTION PROCESSING OF VEHICLE INFORMATION

S54 — REQUEST PROCESSING FOR ROAD INFORMATION

S55 — RECEPTION PROCESSING OF ROAD INFORMATION

S56 — MAIN CALCULATION PROCESSING

S57 — TRANSMISSION PROCESSING OF CALCULATION RESULT

S59 — END

## FIG.5

S111 — START

S112 — SOFTWARE INITIALIZED ?
OR UPDATED ?
NO

YES

S113 — RESISTRATION OF Pvi1:
VALIDITY PERIOD OF VEHICLE INFORMATION

S114 — RESISTRATION OF Pcal1:
DELAY ALLOWABLE TIME AFTER MAIN CALCULATION

S119 — END

## FIG.6

S121 — START

S122 — INITIAL CONNECTION ?
OR SYNCHRONIZATION UPDATE ?
NO

YES

S123 — PERFORMANCE OF TIME SYNCHRONIZATION

S124 — RESISTRATION OF TIME DIFFERENCE
BETWEEN EXTERNAL CONTROL APPARATUS
AND VEHICLE-MOUNTED CONTROL APPARATUS

S129 — END

# FIG.7

S131 — START

S132 — VEHICLE-INFORMATION TRANSMISSION REQUESTED ? — NO

YES

S133 — ATTATCHMENT OF FIRST TIME INFORMATION TO VEHICLE INFORMATION

S134 — TRANSMISSION TO EXTERNAL CONTROL APPARATUS

S139 — END

# FIG.8

S531 — START

S532 — HAS VEHICLE INFORMATION BEEN RECEIVED ? — NO

YES

S533 — DETACHMENT OF FIRST TIME INFORMATION FROM VEHICLE INFORMATION

S534 — STORING OF FIRST TIME INFORMATION

S535 — PROVISION OF VEHICLE INFORMATION TO CALCULATION UNIT

S539 — END

# FIG.9

S571 — START

S572 — HAS MAIN CALCULATION BEEN ENDED ?

NO

YES

S573 — ATTATCHMENT OF
FIRST TIME INFORMATION
AND SECOND TIME INFORMATION
TO MAIN CALCULATION RESULT

S574 — TRANSMISSION TO
VEHICLE-MOUNTED CONTROL APPARATUS

S579 — END

# FIG.10

S151 — START

S152 — MAIN CALCULATION RESULT RECEIVED ?

NO

YES

S153 — SEPARATION OF
FIRST TIME INFORMATION
AND SECOND TIME INFORMATION
FROM MAIN CALCULATION RESULT

S154 — PROVISION OF
FIRST TIME INFORMATION [T1]
AND SECOND TIME INFORMATION [T2]
TO TIME CONFIRMATION PROCESSING UNIT

S159 — END

# FIG.11

S161

START

S162

T1,T2 PROVIDED ?

NO

YES

S163

TR−T1＜Pvi1 ?

NO

YES

S164

TR−T2＜Pcal1 ?

NO

YES

S166

MAIN CALCULATION RESULT
NOT EXCEED TIME LIMIT
AND IS ALLOWED.

MAIN CALCULATION RESULT
EXCEEDS TIME LIMIT
AND IS NOT ALLOED.

S165

END

S169

# FIG.12

S171 — ( START )

S172

MAIN CALCULATION
RESULT RECEIVED ?

NO

YES

S173

MAIN CALCULATION RESULT
WITHIN TIME ALLOWABLE RANGE ?

NO

YES

S174

SET MAIN CALCULATION RESULT
IN VEHICLE CONTROL UNIT

S175

SET BACKUP CALCULATION RESULT
IN VEHICLE CONTROL UNIT

S176

PERFORM VEHICLE CONTROL

( END ) — S179

# FIG.13

# FIG.14

S10 — START

S21 — PRELIMINARY PROCESSING

S12 — TIME SYNCHRONIZATION PROCESSING

S13 — TRANSMISSION PROCESSING
OF VEHICLE INFORMATION

S14 — BACKUP CALCULATION PROCESSING

S15 — RECEPTION PROCESSING
OF MAIN CALCULATION RESULT

S16 — TIME CONFIRMATION PROCESSING

S26 — CALCULATION-RESULT ALLOWANCE
DETERMINATION PROCESSING

S27 — SWITCHING PROCESSING
FOR CALCULATION RESULT

S19 — END

# FIG.15

S111 — START

S112 — SOFTWARE INITIALIZED ?
OR UPDATED ?

NO

YES

S113 — REGISTRATION OF Pvi1:
VALIDITY PERIOD OF VEHICLE INFORMATION

S114 — REGISTRATION OF Pcal1:
DELAY ALLOWABLE TIME AFTER MAIN CALCULATION

S215 — REGISTRATION OF ALLOWABLE RANGE

S119 — END

FIG.16

FIG.17

# FIG.18

S261 — ( START )

S262 — ⟨ MAIN CALCULATION RESULT RECEIVED ? ⟩

NO

YES

S263 — ⟨ TRAVELING ROUTE WITH MAIN CALCULATION WITHIN ALLOWABLE RANGE ? ⟩

NO

YES

S264 — CALCULATION OF AMOUNT OF DISPLACEMENT BETWEEN CREATED TRAVELING ROUTES BY EXTERNAL CONTROL APPARATUS AND BY VEHICLE-MOUNTED CONTROL APPARATUS

S265 — ⟨ AMOUNT OF DISPLACEMENT WITHIN ALLOWABLE RANGE ? ⟩

NO

YES

S266 — CALCULATION OF MARGIN TIME OF COLLISION BETWEEN TRAVELING ROUTE AND NEIGHBORING VEHICLE

S267 — ⟨ MARGIN TIME OF COLLISION WITHIN ALLOWABLE RANGE ? ⟩

NO

YES

S268 — MAIN CALCULATION RESULT IS WITHIN ROUTE ALLOWABLE RANGE.

S269 — MAIN CALCULATION RESULT IS NOT WITHIN ROUTE ALLOWABLE RANGE.

S270 — ( END )

# FIG.19

S171 — START

S172 — MAIN CALCULATION RESULT RECEIVED ?

NO

YES

S173 — MAIN CALCULATION RESULT WITHIN TIME ALLOWABLE RANGE ?

NO

YES

S271 — MAIN CALCULATION RESULT WITHIN ROUTE ALLOWABLE RANGE ?

NO

YES

S174 — SET MAIN CALCULATION RESULT IN VEHICLE CONTROL UNIT

S175 — SET BACKUP CALCULATION RESULT IN VEHICLE CONTROL UNIT

S176 — PERFORM VEHICLE CONTROL

END — S179

# FIG.20

RATIO OF TRAVELING ROUTE
WITH BACKUP CALCULATION

TIME

75%    25%

50%    50%

25%    75%

RATIO OF TRAVELING ROUTE
WITH MAIN CALCULATION

# FIG.21

S10 — ( START )

S21 — | PRELIMINARY PROCESSING |

S12 — | TIME SYNCHRONIZATION PROCESSING |

S13 — | TRANSMISSION PROCESSING OF VEHICLE INFORMATION |

S14 — | BACKUP CALCULATION PROCESSING |

S15 — | RECEPTION PROCESSING OF MAIN CALCULATION RESULT |

S36 — | TIME-INFORMATION-ORDER CONFIRMATION PROCESSING |

S16 — | TIME CONFIRMATION PROCESSING |

S26 — | CALCULATION-RESULT ALLOWANCE DETERMINATION PROCESSING |

S37 — | SWITCHING PROCESSING FOR CALCULATION RESULT |

S19 — ( END )

# FIG.22

S361 — START

S362 — T1, T2 PROVIDED ?

NO

YES

S363 — T1old < T1 ?

NO

S364 — YES

T2old < T2 ?

NO — S367

YES

S365 — MAIN CALCULATION RESULT IS DETERMINED EFFECTIVE

MAIN CALCULATION RESULT IS DETERMINED INEFFECTIVE

S366 — T1old ← T1
T2old ← T2

END — S369

# FIG.23

S171 ── ( START )

S172

MAIN CALCULATION
RESULT RECEIVED ?

NO

YES

S173

MAIN CALCULATION RESULT
WITHIN TIME ALLOWABLE RANGE ?

NO

YES

S271

MAIN CALCULATION RESULT
WITHIN ROUTE ALLOWABLE RANGE ?

NO

YES

S371

MAIN CALCULATION
RESULT EFFECTIVE ?

NO

YES

S174

SET MAIN CALCULATION RESULT
IN VEHICLE CONTROL UNIT

S175

SET BACKUP CALCULATION RESULT
IN VEHICLE CONTROL UNIT

S176

PERFORM VEHICLE CONTROL

( END ) ── S179

# FIG.24

EXTERNAL CONTROL APPARATUS — 10

CALCULATION UNIT — 13

TIME SYNCHRONIZATION UNIT — 14

TIME INFORMATION ATTACHMENT/DETACHMENT UNIT — 15

VEHICLE MANAGEMENT UNIT — 16

FIRST DATA RECEPTION UNIT — 11

FIRST DATA TRANSMISSION UNIT — 12

VEHICLE-MOUNTED CONTROL APPARATUS — 20

VEHICLE-MOUNTED CONTROL APPARATUS — 20

# INTERNATIONAL SEARCH REPORT

| International application No. |
|---|
| PCT/JP2020/041474 |

**A. CLASSIFICATION OF SUBJECT MATTER**
G08G 1/09(2006.01)i; B60W 50/02(2012.01)i; B60W 60/00(2020.01)i
FI: G08G1/09 V; B60W50/02; B60W60/00

According to International Patent Classification (IPC) or to both national classification and IPC

**B. FIELDS SEARCHED**

Minimum documentation searched (classification system followed by classification symbols)
G08G1/00-99/00;    B60W30/00-60/00;    B62D6/00-6/10;    B60K31/00-31/18;
G05D1/00-1/12; H04B7/24-7/26; H04W4/00-99/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2019-174304 A (PANASONIC IP MANAGEMENT CO., LTD.) 10 October 2019 (2019-10-10) paragraphs [0020]-[0023], [0062]-[0063], [0073]-[0079], [0109], [0130], [0176] | 1-3, 9, 12-13<br>8<br>4-7, 10-11 |
| Y | JP 2010-061346 A (IHI AEROSPACE CO., LTD.) 18 March 2010 (2010-03-18) paragraph [0018] | 8 |
| Y | JP 2008-306472 A (HITACHI, LTD.) 18 December 2008 (2008-12-18) paragraph [0045] | 8 |
| A | JP 2019-537159 A (NISSAN NORTH AMERICA, INC.) 19 December 2019 (2019-12-19) paragraphs [0048], [0056], [0079], fig. 3 | 1-13 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 January 2021 (18.01.2021) | 26 January 2021 (26.01.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| International application No. |
| --- |
| PCT/JP2020/041474 |

| Patent Documents referred in the Report | Publication Date | Patent Family | Publication Date |
| --- | --- | --- | --- |
| JP 2019-174304 A | 10 Oct. 2019 | (Family: none) | |
| JP 2010-061346 A | 18 Mar. 2010 | (Family: none) | |
| JP 2008-306472 A | 18 Dec. 2008 | US 2008/0307075 A1 paragraph [0067] CN 101321180 A | |
| JP 2019-537159 A | 19 Dec. 2019 | WO 2018/102474 A1 paragraphs [0048], [0056], [0079], fig. 3 EP 3548974 A1 CN 110249272 A | |

**EP 4 242 999 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019106674 A